# EUROPEAN PATENT SPECIFICATION

(11) **EP 1 929 178 B1**
(45) Date of publication and mention of the grant of the patent: **23.12.2009**
(21) Application number: 05802419.1
(22) Date of filing: 27.09.2005
(51) Int. Cl.: F16H 7/02, F16H 7/18, F16H 7/12, F16H 57/05

(54) **BELT DRIVE FOR USE IN OIL PROVIDED WITH A SHOE**
MIT EINEM SCHUH VERSEHENER RIEMENTRIEB ZUR VERWENDUNG IN ÖL
COURROIE D'ENTRAÎNEMENT À UTILISER DANS DE L'HUILE, AVEC SABOT

(43) Date of publication of application: 11.06.2008
(73) Proprietor: Dayco Europe S.R.L. Con Unico Socio, Frazione Chieti Scalo 66013 Chieti (IT)
(72) Inventor: DI MECO, Marco, I-65129 Pescara (IT)
(74) Representative: Jorio, Paolo
(86) International application number: PCT/IT2005/000558
(87) International publication number: WO 2007/036959

(56) References cited:
- EP-A- 1 157 813
- DE-A1- 3 434 428
- DE-A1- 19 954 808
- DE-A1-102004 008 683
- US-A- 3 951 096
- US-A- 4 031 761
- US-A- 5 178 566
- US-A- 5 405 299
- US-A- 5 447 127
- US-A1- 2002 121 260
- US-B1- 6 206 739

## Description

### TECHNICAL FIELD

The present invention relates to a belt drive for use in oil with a shoe, for example for use aboard a motor vehicle.

### BACKGROUND ART

Recently, as disclosed in WO-2005080820 there have been developed belt drives for use in oil comprising a toothed drive pulley connected to a crankshaft of an internal combustion engine, at least one driven toothed pulley connected to a balancing shaft, a belt having an elastomeric material body defined laterally by a pair of side surfaces, a plurality of filiform inserts longitudinally embedded in the body and a toothing protruding from the body to mesh with the toothed pulleys.

Such drives also comprise a shoe to maintain an appropriate tensioning and/or to define a required path of the belt.

The shoe is provided with a curved wall cooperating with a back of a belt radially opposite the toothing, and a pair of side flanges facing the sides of the toothed belt.

In operation, the oil present in the surrounding environment generates, between the back and the curved wall, a gap which favours the sliding of the belt on the shoe; the flanges are provided for the purpose of containing the side leakage of oil and thus of improving lubrication.

However, it has been verified that in belt drives for use in oil, the belt tends to be poorly lubricated, especially on the sides, getting damaged and compromising drive reliability.

### DISCLOSURE OF INVENTION

It is the object of the present invention to carry out a toothed belt drive for use in oil provided with a shoe, which is capable of ensuring an optimal lubrication of the toothed belt avoiding damage.

The object of the present invention is achieved by a belt drive for use in oil as defined in claim 1.

### BRIEF DESCRIPTION OF THE DRAWINGS

For a better understanding of the present invention, it will now be described a preferred embodiment only by way of non-limitative example, and with reference to the accompanying drawings, in which:
- figure 1 is a prospective view of a belt drive for use in oil according to the present invention;
- figure 2 is a partial prospective section of a belt of the drive in figure 1; and
- figure 3 is a prospective view of a detail in figure 1.

### BEST MODE FOR CURRYING OUT THE INVENTION

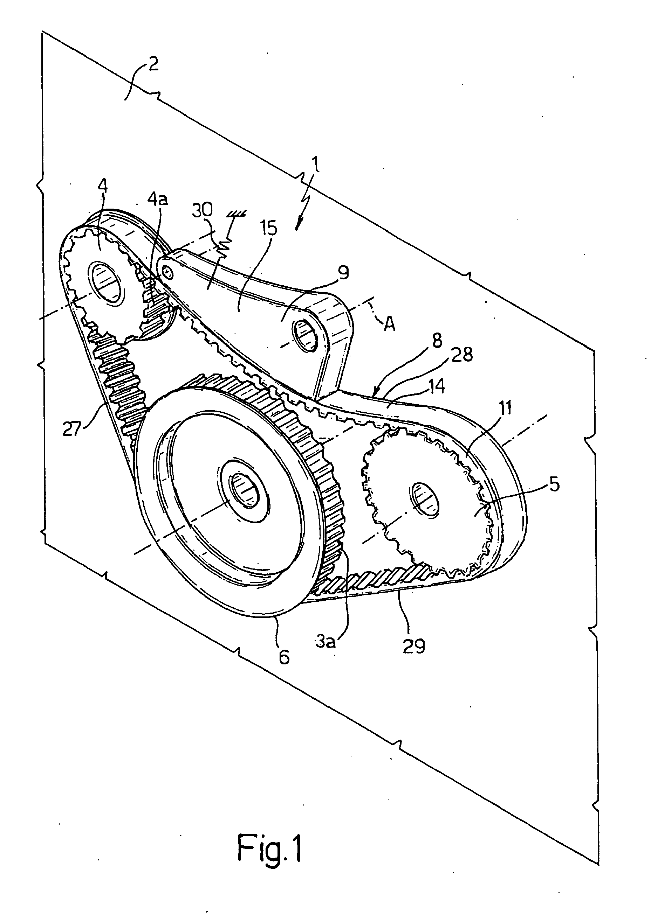

Figure 1 shows with 1, as a whole, a belt drive arranged in the proximity of a wall 2 of an internal combustion engine (not shown) and including a toothed pulley 3 adapted to be connected to a motion source, for example a crankshaft of the internal combustion engine, a driven pulley 4 connected to an operating device (not shown), for example an oil pump, and a driven pulley 5 adapted to be connected to a balancing countershaft to damper the twisting vibrations of the engine.

The toothed pulley 3 includes a toothing 3a and a side flange 6 arranged on the opposite part of the wall 2 with respect to the toothing 3a; the driven pulley 4 includes a toothing 4a and a side flange 7 arranged on the part of the side wall 2 with respect to the toothing 4a.

The belt drive 1 includes a toothed belt 8 to connect the toothed pulley 3 to the driven pulleys 4, 5, and a shoe 9 arranged between the driven pulleys 4, 5 and pushed by a spring 30 against the toothed belt 8.

The belt drive 1 also defines branches 27, 28, 29 respectively provided between the drive pulley 3 and the driven pulley 4, between the driven pulley 4 and the driven pulley 5 and between the driven pulley 5 and the drive pulley 3.

In particular, the toothed belt 8 is laterally guided by the side flange 6 of the drive pulley 3 on one part and by the side flange 7 of the driven pulley 8 on the other part.

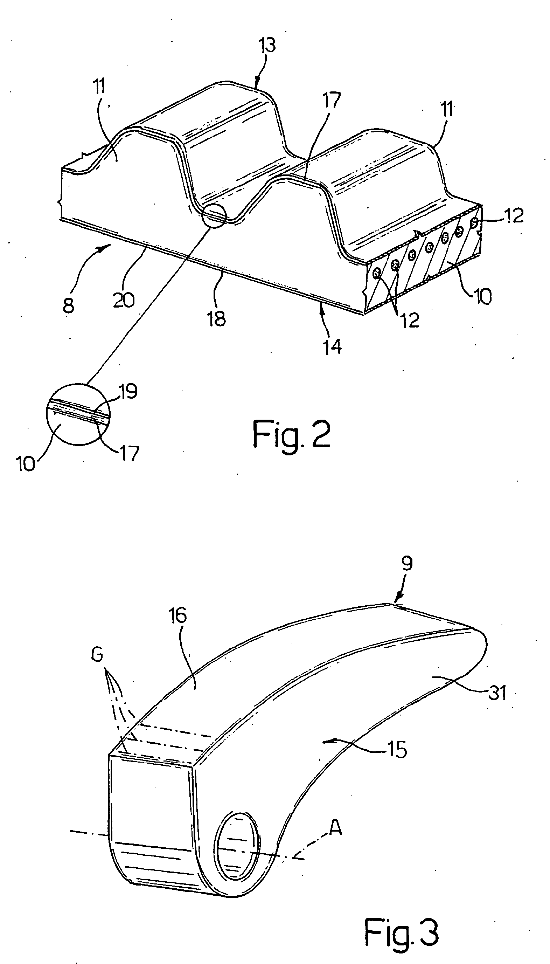

The toothed belt 8 includes (figure 2) an elastomeric material body 10 laterally defined by a pair of side surfaces 11, a plurality of resistant inserts 12 longitudinally incorporated in the body 10, a toothing 13 radially protruding from the body 10 to cooperate with the pulleys 3, 4, 5 and a back 14 radially defining the body 10 on the part opposite to the toothing 13 and cooperating with the shoe 9.

The shoe 9 (figure 3) includes a shaped body 15 hinged around an axis A extending from the wall 2. The shaped body 15 defines a curved guiding surface 16 in contact with the back 14 of the toothed belt 8 and a pair of flat surfaces 31 perpendicular to the axis A and laterally defining the curved surface 16.

In particular, the curved surface 16 presents a convex curved profile on a plane perpendicular to axis A and a straight profile in each section traced with a plane containing axis A, that is presents generating lines G straight and parallel to axis A.

The shoe 9, moreover, does not have any side containment element for the toothed belt 8; in particular, the shoe 9 is unprovided with flanges extending in relief from the curved surface 16 and laterally defining the latter.

Preferably, the body 10 includes as main elastomer, that is present by more than 50% by weight with respect to the other elastomers used in the compound, a copolymer formed from a monomer containing nitrile groups and from a diene.

More preferably, the copolymer used is hydrogenated acrylonitrile butadiene.

Preferably, the copolymer used is obtained from monomers containing nitrile groups in a percentage from 33 to 49% by weight with respect to the final copolymer.

Still more preferably, the copolymer used is obtained from monomers containing nitrile groups in a percentage of 39% by weight with respect to the final copolymer for example it is possible to use a compound constituted by 50% of THERBAN 3446 (Bayer registered trademark) and by 50% of THERBAN 4307 (Bayer registered trademark).

Advantageously, the elastomeric material compound also comprises fibres, preferably in a percentage by weight from 0.5 to 15% with respect to the elastomeric material and preferably having a length from 0.1 to 10 mm.

The toothed belt 8 further includes covering fabrics 17, 18 carried respectively by the toothing 13 and by the back 14 can be comprised of one or more layers and may also be obtained by means of the weaving technique known as 2x2 twill.

The fabrics 17, 18 preferably consist of a polymeric material, preferably aliphatic or aromatic polyamide, still more preferably a high heat resistant and high tenacity polyamide 6.6.

The fabrics 17, 18 can also advantageously be of the type in which each weave thread consists of an elastic thread as core and at least one composite thread wound on the elastic thread, where the composite thread includes a high thermal and mechanical resistant thread and at least one covering thread wound on the high thermal and mechanical resistant thread.

According to a feature of the present invention, the toothed belt 8 include resistant layers 19, 20 respectively arranged externally to the fabrics 17, 18.

The resistant layers 19, 20 consist of a fluorinated plastomer additivated with an elastomeric material and the fluorinated plastomer is present in higher amount by weight with respect to the elastomeric material.

An example of usable resistant layer is for example described in EP1157813 filed by the same applicant.

The fluorinated plastomer preferably consists of a polytetrafluoroethylene base compound.

Preferably, the elastomeric material with which the fluorinated plastomer is mixed to form the resistant layers 19, 20 is HNBR, still more preferably it is a HNBR modified with a polymethacrylic acid zinc salt, for example ZEOFORTE ZSC (Nippon Zeon registered trademark) can be used.

Preferably, the resistant layers 19, 20 to ensure the necessary resistance have a weight from 150 to 400 g/m2, which is equal to an average thickness from 0.050 to 1 mm.

Preferably, the fluorinated plastomer is present in quantities from 101 to 150 by weight per 100 parts of elastomeric material.

The resistant layers 19, 20 further include a peroxide as vulcanisation agent. The peroxide is normally added in amounts from 1 to 15 parts by weight with respect to 100 parts of elastomeric material.

Preferably between the fabrics 17, 18 and the respective resistant layers 19, 20 it is arranged an adhesive material.

The resistant inserts 12 are made of one or more materials chosen from the group consisting of glass fibres, aramidic fibres, polyester fibres, carbon fibres, PBO fibres.

Preferably, the resistant inserts 12 are of the "hybrid" type, that is are made of at least two different materials.

The first material is preferably glass fibre, the second material is preferably carbon fibre. Still more preferably, the glass fibres are high modulus.

The glass fibres are wound around the carbon fibres so as to externally cover at least partially the carbon fibres themselves, preferably so as to cover entirely the carbon fibres.

The resistant inserts 12 are preferably treated with a latex, resorcinol and formaldehyde based composition, known as RFL, and in particular with a RFL composition adapted to avoid the absorption of oil. Preferably, the RFL used therefore comprises a latex formed by a monomer containing nitrile groups and a diene, for example HNBR or hydrogenated acrylonitrile butadiene. Still more preferably, the latex is obtained from monometers containing nitrile groups in a percentage by weight with respect to the final copolymer similar to the preferred elastomeric material used for forming the previously described body 10.

The operation of the belt drive 1 is as follows. The drive is arranged inside a closed case to prevent the leakage of oil and the turbulence caused by the ventilating effect of the drive generates inside the case a suspension of particles of oil which tend to deposit on the external surfaces of the components contributing to lubrication. In particular, such effect is important to allow the sliding of the back 14 on the curved surface 16 of the shoe 9.

In operation, the toothed belt 8 is laterally guided by the side flanges 6 and 7.

The lack of a side flange on the shoe 9 allows to eliminate a shielding against the deposit of oil particles in suspension improving the lubrication of the side surfaces 11 which subsequently cooperate with the side flanges 6, 7 to guide the belt 8.

It has been verified that in belt drives, the transversal movement directions generate high contact pressures against the side surfaces 11. Such pressures tend to remove the oil from the side surfaces 11 thus generating high friction coefficient sliding zones which damage the sides of the belt.

Furthermore, it is possible to design the curved surface 16 to decrease the contact pressures and to thus maintain the oil gap between the back 14 and the shoe 15.

It is finally apparent that modifications and variations can be made to the shoe 1 here described and illustrated without departing from the scope of protection of the present invention, as defined in the accompanying claims.

For example, the shoe 9 can be arranged between the toothed pulley 3 and the driven pulley 4.

Alternatively, the side flanges 6, 7 can be reversed between the drive pulley 3 and the driven pulley 4 or can be carried by a single pulley of the drive 1 on side parts opposite with respect to the toothed belt 8.

## Claims

1. A belt drive for use in oil including a first toothed pulley (3) adapted to be connected to a motion source, at least one second toothed pulley (4; 5) adapted to be connected to an operating device, a toothed belt (8) wound around said first and at least one second pulley (3, 4; 5) and a shoe (9) defining a contact surface (16) cooperating with said toothed belt (8) and hinged around an axis (A), said toothed belt (8) including an elastomeric material body (10), a plurality of resistant elements (12) embedded inside said body (10), a toothing (13) protruding from said body (10) to cooperate with said first and second toothed pulleys (3, 4; 5), a back (14) arranged on the opposite part of said toothing (13) with respect to said body (10) and directly cooperating with said contact surface (16) and a pair of side longitudinal surfaces (11) laterally defining said body (10), said drive (1) being **characterised in that** said shoe (9) is unprovided with side containing elements for said toothed belt (8) adapted to cooperate with said side surfaces (11) of said toothed belt (8) and that belt drive comprises a spring (30) to push said shoe (9) against said toothed belt (8).

2. A drive according to claim 1, **characterised in that** said contact surface (16) presents generating lines (G) substantially parallel to said axis (A).

3. A drive according to one of the claims 1 or 2, **characterised in that** at least one of said first and second pulleys (3, 4; 5) includes guiding means (6; 7) cooperating with said side surfaces (11) to guide said toothed belt (8).

4. A drive according to claim 3, **characterised in that** said first and at least second pulleys (3, 4; 5) include respective side flanges (6, 7) to guide said toothed belt (8) and **in that** said side flanges (6, 7) are connected to the respective first and at least second pulleys (3, 4; 5) on opposite side parts with respect to said toothed belt (8).

5. A drive according to any of the preceding claims, **characterised in that** said back (14) presents a covering fabric (18).

6. A drive according to claim 5, **characterised in that** said covering fabric (18) is covered by a respective resistant layer (20) including a fluorinated plastomer additivated with an elastomeric material.

7. A drive according to any of the preceding claims, **characterised in that** said toothing (13) presents a second covering fabric (17) covered by a second resistant layer (19) including a fluorinated plastomer additivated with an elastomeric material.

8. A drive according to one of the claims 6 or 7, **characterised in that** in said resistant layers (19; 20) the fluorinated plastomer is present in amount higher by weight than the elastomeric material.

9. A drive according to any of the claims from 6 to 8, **characterised in that** the fluorinated plastomer is a polytetrafluoroethylene based compound.

10. A drive according to any of the claims from 6 to 9, **characterised in that** said elastomeric material with which is mixed the fluorinated plastomer to form the resistant layer includes a HNBR.

11. A drive according to claim 10, **characterised in that** said elastomeric material is a HNBR modified with a polymethacrylic acid zinc salt.

12. A drive according to any of the preceding claims, **characterised in that** said resistant inserts (12) of said toothed belt (8) consist of at least one material chosen from the group consisting of glass fibres, aramidic fibres, polyester fibres, carbon fibres, PBO fibres.

13. A drive according to claim 12, **characterised in that** said resistant inserts (12) include glass fibres and carbon fibres.

14. A drive according to one of the preceding claims, **characterised in that** said resistant inserts (12) are treated with a RFL comprising a latex formed by a monometer containing nitrile groups and a diene.

## Patentansprüche

1. Riemenantrieb zur Verwendung in Öl mit einer ersten Zahnriemenscheibe (3), die angepasst ist, um mit einer Bewegungsquelle verbunden zu sein, mindestens einer zweiten Zahnriemenscheibe (4; 5), die angepasst ist, um mit einer Betätigungsvorrichtung verbunden zu sein, einem Zahnriemen, (8) der um die erste und die mindestens eine zweite Riemenscheibe (3, 4; 5) gewickelt ist, und einem Schuh (9), der eine Kontaktoberfläche (16) definiert, die mit dem Zahnriemen (8) zusammenarbeitet und um eine Achse (A) drehbar ist, wobei der Zahnriemen (8) einen elastomeren Materialkörper (10), eine Mehrzahl von Resistenzelementen (12), die in dem Körper (10) eingebettet sind, eine Verzahnung (13), die von dem Körper (10) hervorsteht, um mit den ersten und zweiten Zahnriemenscheiben (3, 4; 5) zusammenzuarbeiten, einen Rücken (14), der an dem gegenüberliegenden Teil der Verzahnung (13) mit Bezug auf den Körper (10) angeordnet ist und direkt mit der Kontaktoberfläche (16) zusammenarbeitet, und ein Paar von longitudinalen Seitenoberflächen (11), die den Körper (10) lateral definieren, aufweist, wobei der Antrieb (1) **dadurch gekennzeichnet** wird, dass der Schuh (9) nicht mit in der Seite enthaltenen Elementen für den Zahnriemen (8) versehen ist, die angepasst sind, um mit den Seitenoberflächen (11) des Zahnriemens (8) zusammenzuarbeiten, und dass der Riemenantrieb eine Feder (30) umfasst, um den Schuh (9) gegen den Zahnriemen (8) zu drücken.

2. Antrieb gemäß Anspruch 1, **dadurch gekennzeichnet, dass** die Kontaktoberfläche (16) erzeugende Linien (G) aufweist, die im Wesentlichen parallel zu der Achse (A) sind.

3. Antrieb gemäß einem der Ansprüche 1 oder 2, **dadurch gekennzeichnet, dass** mindestens eine der ersten und zweiten Riemenscheiben (3, 4; 5) Führungsmittel (6; 7) aufweist, die mit den Seitenoberflächen (11) zusammenarbeiten, um den Zahnriemen (8) zu führen.

4. Antrieb gemäß Anspruch 3, **dadurch gekennzeichnet, dass** die ersten und mindestens zweiten Riemenscheiben (3, 4; 5) jeweilige Seitenflansche (6, 7) aufweisen, um den Zahnriemen (8) zu führen, und **dadurch**, dass die Seitenflansche (6, 7) mit den jeweiligen ersten und mindestens zweiten Riemenscheiben (3, 4; 5) an gegenüberliegenden Seitenteilen mit Bezug auf den Zahnriemen (8) verbunden sind.

5. Antrieb gemäß einem der vorhergehenden Ansprüche, **dadurch gekennzeichnet, dass** der Rücken (14) ein Deckgewebe (18) aufweist.

6. Antrieb gemäß Anspruch 5, **dadurch gekennzeichnet, dass** das Deckgewebe (18) durch eine jeweilige Resistenzschicht (20) bedeckt ist, die ein mit einem elastomeren Material additiviertes fluoriertes Plastomer aufweist.

7. Antrieb gemäß einem der vorhergehenden Ansprüche, **dadurch gekennzeichnet, dass** die Verzahnung (13) ein zweites Deckgewebe (17) aufweist, das durch eine zweite Resistenzschicht (19) bedeckt ist, die ein mit einem elastomeren Material additiviertes fluoriertes Plastomer aufweist.

8. Antrieb gemäß einem der Ansprüche 6 oder 7, **dadurch gekennzeichnet, dass** in den Resistenzschichten (19; 20) das fluorierte Plastomer in einer Menge vorhanden ist, die nach Gewicht höher als die des elastomeren Materials ist.

9. Antrieb gemäß einem der Ansprüche 6 bis 8, **dadurch gekennzeichnet, dass** das fluorierte Plastomer eine Verbindung auf Polytetrafluoroethylen-Basis ist.

10. Antrieb gemäß einem der Ansprüche 6 bis 9, **dadurch gekennzeichnet, dass** das elastomere Material, mit dem das fluorierte Plastomer gemischt ist, um die Resistenzschicht zu bilden, einen HNBR aufweist.

11. Antrieb gemäß Anspruch 10, **dadurch gekennzeichnet, dass** das elastomere Material ein HNBR ist, der mit einem Zinksalz der Polymethacrylsäure modifiziert ist.

12. Antrieb gemäß einem der vorhergehenden Ansprüche, **dadurch gekennzeichnet, dass** die Resistenzeinsätze (12) des Zahnriemens (8) aus mindestens einem Material bestehen, das aus der aus Glassfasern, Aramidfasern, Polyesterfasern, Kohlenstofffasern und PBO-Fasern bestehenden Gruppe ausgewählt wird.

13. Antrieb gemäß Anspruch 12, **dadurch gekennzeichnet, dass** die Resistenzeinsätze (12) Glassfasern und Kohlenstofffasern aufweisen.

14. Antrieb gemäß einem der vorhergehenden Ansprüche, **dadurch gekennzeichnet, dass** die Resistenzeinsätze (12) mit einem RFL behandelt werden, das ein Latex umfasst, das durch ein Monomer gebildet wird, das Nitrilgruppen und ein Dien enthält.

## Revendications

1. Transmission par courroie destinée à être utilisée dans de l'huile, comprenant une première poulie dentée (3) conçue pour être reliée à une source de mouvement, au moins une deuxième poulie dentée (4 ; 5) conçue pour être reliée à un dispositif de fonctionnement, une courroie crantée (8) enroulée autour desdites première et au moins une deuxième poulies (3, 4 ; 5) et un patin (9) définissant une surface de contact (16) coopérant avec ladite courroie crantée (8) et articulé autour d'un axe (A), ladite courroie crantée (8) comprenant un corps de matériau élastomère (10), une pluralité d'éléments résistants (12) incorporés à l'intérieur dudit corps (10), une denture (13) dépassant dudit corps (10) pour coopérer avec lesdites première et deuxième poulies dentées (3, 4 ; 5), un dos (14) agencé sur la partie opposée de ladite denture (13) par rapport audit corps (10) et coopérant directement avec ladite surface de contact (16) et une paire de surfaces longitudinales latérales (11) définissant latéralement ledit corps (10), ladite transmission (1) étant **caractérisée en ce que** ledit patin (9) n'est pas doté d'éléments latéraux de réception pour ladite courroie crantée (8) conçus pour coopérer avec lesdites surfaces latérales (11) de ladite courroie crantée (8), et **en ce que** la transmission par courroie comprend un ressort (30) pour pousser ledit patin (9) contre ladite courroie crantée (8).

2. Transmission selon la revendication 1, **caractérisée en ce que** ladite surface de contact (16) présente des lignes de génération (G) sensiblement parallèles audit axe (A).

3. Transmission selon l'une des revendications 1 ou 2, **caractérisée en ce que** au moins une desdites première et deuxième poulies (3, 4 ; 5) comprend un moyen de guidage (6 ; 7) coopérant avec lesdites surfaces latérales (11) afin de guider ladite courroie crantée (8).

4. Transmission selon la revendication 3, **caractérisée en ce que** lesdites première et au moins une deuxième poulies (3, 4 ; 5) comprennent des joues latérales (6, 7) respectives pour guider ladite courroie crantée (8) et **en ce que** lesdites joues latérales (6, 7) sont reliées aux première et au moins deuxième poulies (3, 4 ; 5) respectives sur les parties latérales opposées par rapport à ladite courroie crantée (8).

5. Transmission selon l'une quelconque des revendications précédentes, **caractérisée en ce que** ledit dos (14) présente une étoffe de recouvrement (18).

6. Transmission selon la revendication 5, **caractérisée en ce que** ladite étoffe de recouvrement (18) est recouverte d'une couche résistante (20) respective comprenant un plastomère fluoré ayant pour additif un matériau élastomère.

7. Transmission selon l'une quelconque des revendications précédentes, **caractérisée en ce que** ladite denture (13) présente une deuxième étoffe de recouvrement (17) recouverte d'une deuxième couche résistante (19) comprenant un plastomère fluoré ayant pour additif un matériau élastomère.

8. Transmission selon l'une des revendications 6 ou 7, **caractérisée en ce que** dans lesdites couches résistantes (19 ; 20), le plastomère fluoré est présent dans une quantité supérieure en poids à celle du matériau élastomère.

9. Transmission selon l'une quelconque des revendications 6 à 8, **caractérisée en ce que** le plastomère fluoré est un composé à base de polytétrafluoroéthylène.

10. Transmission selon l'une quelconque des revendications 6 à 9, **caractérisée en ce que** ledit matériau élastomère, avec lequel est mélangé le plastomère fluoré pour former la couche résistante, comprend un HNBR.

11. Transmission sur la revendication 10, **caractérisée en ce que** ledit matériau élastomère est un HNBR modifié avec un sel de zinc d'acide polyméthacrylique.

12. Transmission selon l'une quelconque des revendications précédentes, **caractérisée en ce que** lesdites pièces rapportées résistantes (12) de ladite courroie crantée (8) sont constituées d'au moins un matériau choisi parmi le groupe constitué de fibres de verre, de fibres aramides, de fibres de polyester, de fibres de carbone, de fibres de PBO.

13. Transmission selon la revendication 12, **caractérisée en ce que** lesdites pièces rapportées résistantes (12) comprennent des fibres de verre et des fibres de carbone.

14. Transmission selon l'une des revendications précédentes, **caractérisée en ce que** lesdites pièces rapportées résistantes (12) sont traitées avec une composition RFL comprenant un latex formé par un monomère contenant des groupes nitrile et un diène.
